# EUROPEAN PATENT SPECIFICATION

(11) **EP 2 749 759 B1**
(45) Date of publication and mention of the grant of the patent: **24.01.2018**
(21) Application number: 12199695.3
(22) Date of filing: 28.12.2012
(51) Int. Cl.: F02D 41/02, F01N 3/20, F02B 37/22, F02D 41/00, F01N 5/04, F01N 13/10, F02B 37/02, F02B 39/16

(54) **Method and apparatus for controlling an EGR system dependent on the state of an SCR system**
Verfahren und Vorrichtung zum Steuern eines AGR-Systems abhängig von einem SCR-System
Procédé et appareil pour contrôler un système de EGR qui dépend d'un système de SCR

(43) Date of publication of application: 02.07.2014
(73) Proprietor: FPT Industrial S.p.A., 10156 Torino (IT)
(72) Inventor: D'Epiro, Clino, 10091 Alpignano (IT)
(74) Representative: Franzolin, Luigi

(56) References cited:
- DE-A1-102009 040 787
- US-A1- 2005 282 285

## Description

### Application field of the invention

The present invention relates to the field of systems for the exhaust gas recirculation in supercharged engines, and in particular to an exhaust gas recirculation system EGR in a supercharged engine equipped with an exhaust gas after-treatment system (ATS).

### Description of the prior art

Due to the regulations imposing emission limits, the majority of the manufacturers has introduced and improved the EGR technique.

Recently, however, when new and stricter limits have been imposed, all the manufacturers were forced to implement also a device for reducing NOx, called SCR. It is a chemical reactor which uses a reducing agent. According to the new regulations, while the EGR technique alone cannot adequately reduce the production of NOx, the SCR may fully replace the EGR technique.

Anyway, the presence of two systems that act at the same time on the same regulated pollutant introduces new problems, above all related to fuel consumption.

Being a chemical catalyst, the SCR needs to reach a predetermined temperature threshold to guarantee a determined efficiency.

To reach such threshold as soon as possible, which in general is about 250°C, different techniques are known which result in an additional fuel consumption.

One of these, for example, provides post-injections of fuel, another provides a choking of the exhaust, so that the engine point is artificially varied with an increase of fuel consumption.

US8112986 shows a system where the NOx production is controlled according to the SCR capacity in order to avoid reductant release.

It has been observed that, in determined operating conditions concurrent with determined environmental conditions, the efficiency temperature threshold of the SCR is never reached, or it is reached with a huge fuel consumption and with corresponding huge emissions of unburned hydrocarbons.

In addition to such problems, the aqueous urea solution injected upstream of the SCR tends to crystallize and to settle on the walls of the exhaust gas pipe until the temperature of the pipe is low.

For such problem, according to the technique known in the art the pipe is artificially warmed, or the urea injection is inhibited, nullifying the efficiency of the SCR.

Due to the unsteady efficiency of the SCR, the technique known in the art provides a continuous exhaust gas recirculation, even though in an adjustable way, with a minimum rate of 20% of the overall air mass entering the engine.

When the SCR is completely efficient, however, the system is inefficient as a whole, due to the negative pumping work of the engine, that is always present because of the exhaust gas recirculation.

Also when the EGR scroll is of the variable geometry type, it is smaller than the other, in order to avoid that, in certain engine operating conditions, the respective distributor has to be too closed to determine the necessary counterpressure, which results in too much energy transferred to the turbine, already activated by the second fixed-distributor scroll and thus to avoid opening the waste-gate valve too early, loosing useful energy. As a consequence, the negative pumping work is always performed and is performed by all of the engine cylinders.

### Summary of the invention

Therefore the aim of the present invention is to overcome all the aforementioned drawbacks and to provide an EGR recirculation system such that the fuel consumption and the emissions are minimized, regardless of the operating conditions of the SCR and of the environmental atmospheric conditions.

Another aim of the present invention, is to reduce the negative pumping work when the SCR is completely efficient. In the following, the full efficiency of the SCR refers to a respective efficiency exceeding 95% with respect to a nominal value.

According to the present invention, the exhaust gas recirculation mappings are a function of the current efficiency of the SCR. In particular, the percentage of recirculated EGR is an inverse function of the SCR efficiency.

Such SCR efficiency is firstly affected by the operating temperature of the latter, which, in its turn, depends on the operating point of the engine, on the time the engine keeps such operating point and on the ambient temperature and on the quantity of injected urea solution.

Secondly, such efficiency depends on the ageing of the catalyst itself.

When the SCR is completely efficient or it has a high efficiency, namely exceeding 85%, it is evident that the quantity of recirculated exhaust gas should be reduced considerably. Thus, it would be desirable to reduce the pumping work of the cylinders, when the quantity of recirculated exhaust gas is low.

According to a preferred alternative embodiment of the invention, it is possible to limit the negative pumping work in a way proportional to the SCR efficiency.

In order to limit or to nullify the negative pumping work of the engine, according to the present invention, the effects of the exhaust gas recirculation means are uncorrelated from the effects of the supercharging means of the engine.

In other words, the counterpressure that is necessary for the exhaust gas recirculation, is controlled without having any impact on the boost, namely on the supercharging of the engine itself.

According to a preferred alternative embodiment of the invention, a twin-scroll turbine is used, wherein each one of the scrolls is of the variable geometry type, and can be actuated independently of one another.

According to a preferred alternative embodiment of the invention, the respective effusion static sections of both scrolls are preferably dimensioned as if the engine was of the type without EGR.

According to a further aspect of the present invention, the mass of the exhaust gas recirculated by the EGR scroll being the same, the turbine tends to accelerate or to slow down according to the amount of residual gas flow passing through the EGR scroll: this depends on the engine operating point. According to the present invention, the behaviour of the turbine is controlled by means of the second variable geometry scroll, namely the non-EGR scroll.

According to a preferred alternative embodiment of the invention, the EGR scroll has a respective static section whose effusion is equal to the second non-EGR scroll. Thus, one can be of the sliding wall type and the other of the sliding vane type.

According to a preferred alternative embodiment of the invention, the two scrolls have identical dimensions and characteristics.

The variable geometry is preferably of the type per se known, generally of the sliding vane or of the sliding wall type.

According to a first aspect of the present invention, a method for regulating the percentage of recirculated gas EGR is provided.

In particular, the means for regulating the internal fluid dynamics of the second scroll are regulated also as a function of the regulation of the EGR scroll, so that the overall energy transferred to the turbine will balance the power absorbed by the supercharger or by an electric generator driven by the turbine.

Advantageously, it is thus possible to avoid bringing the turbine and/or the supercharger at speeds higher than admissible ones, but also to regulate the boost pressure at the exact required value, regardless of the amount of recirculated EGR, without necessarily using dissipative regulation means, such as for example a waste-gate valve.

According to the present invention, it is possible to realize a highly variable EGR regulation, from 1-2% to 45%.

Furthermore, it is possible to regulate the EGR valve also as a function of the advance fuel injection time, so that, with the same emission rate, a better specific consumption can be obtained.

At the same time, or as an alternative, it is possible to vary the quantity of urea-based additive injected upstream of the SCR for the reduction of pollutant emissions.

According to the present invention, the urea flow rate and the recirculated gas flow rate can be regulated also by minimizing a cost function based on the unit prices of the fuel and of the additive.

The object of the present invention is a method for recirculating the exhaust gas in an engine equipped with ATS, in accordance with claim 1.

Another object of the present invention is a supercharged internal combustion engine equipped with ATS implementing the aforementioned method.

A further object of the present invention is a vehicle comprising the aforementioned system.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a general scheme of an exhaust gas recirculation system according to the present invention;
figures 2 and 3 show preferred alternative embodiments of a component of the scheme shown in figure 1.

In the figures the same reference numbers and letters identify the same elements or components.

### Detailed description of preferred embodiments of the invention

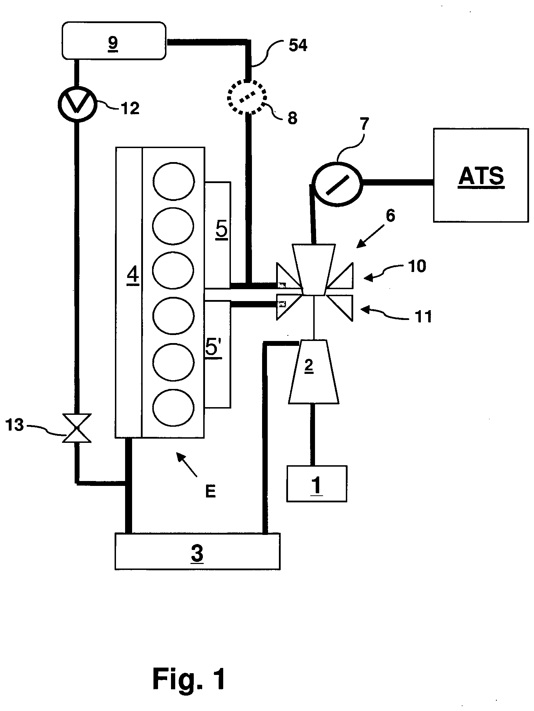

With reference to figure 1, an internal combustion engine E comprises an intake manifold 4 and a pair of exhaust manifolds 5 and 5' each one of them connected to half of the number of cylinders of the engine E. The two exhaust manifolds are distinct and separate from each other.

Each one of the two exhaust manifolds is connected to one of the two scrolls 10, 11 of the turbine 6. Only one of these comprises also a branch 54 for the exhaust gas recirculation EGR. In particular, such branch 54 connects the exhaust manifold 5 to the intake manifold 4.

The turbine 6 is of the twin-scroll type, wherein respective variable geometry distributors are housed.

In particular, the EGR scroll 10 is connected with the exhaust manifold 5, while the other scroll 11 is connected with the exhaust manifold 5'.

The output of the turbine 6 is connected to the exhaust gas after-treatment system ATS.

The turbine may drive the supercharger 2 in rotation by means of a fixed mechanical connection or by means of an electric generator powering an electric motor, which, in its turn, drives the supercharger 2.

Fresh air is sucked by the supercharger 2 through an air filter box 1 and is cooled by means of a cooler 3 before entering the intake manifold 4. Thus, the inlet of the supercharger is connected to the filter box 1 and its outlet is connected to the intake manifold 4 by means of a cooler 3.

According to the alternative embodiment shown in figure 1, also the recirculation branch 54 comprises preferably, from exhaust to intake, its own cooler 9, called EGR cooler, and a check valve 12 and a sensor measuring the recirculated gas mass 13.

Possibly, according to a configuration not shown in the figures, the branch 54 may be connected to the intake manifold upstream of the cooler 3. In such case the EGR cooler 9 may be absent.

According to a preferred alternative embodiment of the present invention, the turbine 6 comprises two scrolls having the same dimensions, suitable to allow the operation of the engine E without any exhaust gas recirculation and without dissipating useless pumping work to the cylinders connected to the exhaust manifold 5, when the exhaust gas recirculation is not necessary. In other words, the EGR scroll 10 is dimensioned and controllable so that, at least in an operating condition, generally at a higher or at the same number of revolutions than/as the maximum torque, it does not generate enough counterpressure for the exhaust gas recirculation. In other words, the pressure at the intake manifold is higher than the pressure at the exhaust manifold. This means that the effusion static section of EGR scroll is dimensioned as if the engine was without EGR. According to the present invention, it is possible to recirculate exhaust gas flow rates comprised between 1-2% and 45%, with the respectively necessary counterpressure. Thus such counterpressure increases proportionately to the gas mass to be recirculated. On the contrary, the variability of the gas flow rate to be recirculated, according to the prior art, is very limited, since the counterpressure is always present, above all in configurations wherein the scrolls have different shapes and effusion static sections.

Although the adoption of the aforementioned twin∸scroll turbine, both scrolls having variable geometries, is not necessarily essential, it made it possible to comprise and to actuate the EGR regulation that is a function of
- the SCR efficiency,
- of the fuel injection advance in the cylinders,
- of the quantity of urea solution injected upstream of the SCR.

Thus, while according to the prior art, due to limited variability of the EGR regulation, once an average exhaust gas flow rate to be recirculated has been chosen, all the other parameters are set during the system design, according to the present invention, the hardware remains the same and the EGR regulation can be continuously varied as a function of the efficiency of the ATS, of the injection advance, and of the quantity of injected additive.

According to a preferred alternative embodiment of the present invention, when the driver fills up the fuel and/or the additive tank, he/she may be asked to insert the unit cost of the fuel and/or of the additive.

Thus the vehicle control unit ECI, which manages the engine, may privilege a higher fuel consumption, namely a higher exhaust gas recirculation, or a higher additive consumption, in relation to the respective costs, in order to minimize the overall operating costs of the vehicle. According to a further preferred alternative embodiment of the invention, when the highest possible power is required to the engine, it is possible to increase simultaneously both the recirculated exhaust gas flow rate and the quantity of injected additive, in order to avoid emitting pollutants, while increasing the fuel injection advance, namely the injection timing. The latter being still a function of the efficiency reached by the SCR.

For example, in case the maximum power is required when the SCR is cold, the increase or the simple injection of additive can anyway be inhibited in order to avoid the generation of crystals in the ATS.

It goes without saying that in such circumstances the engine cannot deliver the highest possible power, since an EGR increase determines a power reduction that can be compensated only partially by a variation, namely an advance, of the injection timing.

The control unit of the engine E calculates the efficiency of the SCR:
- according to NOx measures detected upstream and downstream of the SCR and/or
- according to algorithms based on
   o operating parameters of the engine, such as engine point and/or oil temperature and/or cooling water temperature and/or
   o parameters of the SCR itself, such as the temperature upstream and/or downstream of the SCR and/or
   o ambient parameters such as temperature and humidity.

Then the control unit, on the basis of a maximum threshold of NOx emissions, calculates an EGR flow rate to be recirculated and an additive flow rate to be injected in the SCR. Thus the control unit controls the EGR scroll 10 in a consequent way.

Furthermore, the control unit calculates an engine boost pressure and thus regulates the non-EGR scroll 11 in a way that is complementary to the regulation of the scroll 10, in order to provide the necessary energy Ecomp to the supercharger.

According to a further preferred alternative embodiment of the invention, the control unit calculates said EGR flow rate also on the basis of a predetermined injected aqueous solution flow rate and/or to a predetermined injection advance.

Such necessary EGR percentage and/or such additive flow rate can be calculated, for example, by means of a look-up table or by a feedback control.

On the basis of the necessary counterpressure, the equivalent effusion section of the exhaust gas through the EGR scroll is identified. For example, the geometry of the EGR scroll is varied.

An increase of the counterpressure on the EGR branch corresponds to a decrease of the "residual" gas flow rate crossing the scroll of the EGR turbine, but the speed of such residual gas is accelerated against the impeller of the turbine, releasing its kinetic energy on the impeller of the turbine.

The kinetic energy Ecin_Egr transferred to the turbine from said residual flow rate crossing the EGR scroll varies in relation to the operating point of the engine and to the mass of recirculated gas M_Egr, thus Ecin_Egr=f(M_Egr, BMEP, RPM), where BMEP corresponds to the known brake medium effective pressure, and RPM corresponds to the revolutions per minute of the engine.

According to the present invention, the kinetic energy Ecin transferred as a whole to the impeller of the turbine 6 is made independent of such residual flow rate M_Egr and of its respective energy content. This is obtained by regulating independently the second scroll. Thus, the rotation speed of the turbo-supercharger is regulated only on the basis of the overpressure that is necessary to the supercharger for the intake, namely of the energy Ecomp that is necessary to the supercharger 2, making such overpressure independent of the mass of the recirculated gas. Such regulation, in particular, allows to avoid reaching the nominal limit speed of the turbo-supercharger. In other words, Ecin=f(Ecomp).

When the EGR flow rate is high, it is evident that the contribution of kinetic energy offered by the turbine of the EGR scroll decreases, but it is compensated by the second scroll 11.

Thus, each scroll is able to transmit more than 50% of the kinetic energy Ecomp that is necessary to activate the turbo-supercharger assembly, when the respective distributors are regulated at the minimum effusion section.

This is advantageous also to give a higher acceleration progression to the turbo-supercharger at low speed, with reduced acceleration time of the vehicle. According to the present invention, at high speed, namely at a speed exceeding the revolutions per minute for the maximum torque, the two distributors are regulated in a complementary way, namely one as a function of the EGR and the other as a function of the boost, without exceeding the limits of the design of the turbo-supercharger.

According to another preferred alternative embodiment of the invention, for a speed of rotation lower than the speed required for the maximum torque, both scrolls may be regulated so that the highest possible energy is transferred to the turbine, in order to maximize the boost pressure and with it also the torque and, consequently, the engine's response.

In other words, power is privileged over fuel or urea-based aqueous additive saving.

In this case, the EGR flow rate is a dependent function of the power that is intended to be delivered. Namely the EGR flow rate becomes a function of the engine supercharging and it is no longer an independent variable, as described in the other alternative embodiments. Only if a fine regulation valve 8 is present on the EGR branch, then it is possible to regulate the EGR flow rate regardless of the supercharging imposed to the engine.

When the fine regulation valve is not present, once a target power is known, the scrolls can be regulated; the recirculated EGR flow rate is calculated and thus the additive flow rate and the injection advance can be calculated, as to insure the respect of the regulations on emissions. It is certainly more advantageous to have also the fine regulation valve 8 of the EGR. Since, when the SCR is completely efficient, it allows to keep the oxygen percentage entering the engine high, with an improved fuel combustion and thus a higher torque delivered by the engine.

It is also to be noted that, according to a preferred alternative embodiment of the invention, along the connection between the exhaust manifold 5 and the inlet of the EGR scroll 10, no further regulation valves or choking elements are present.

The scroll 11 compensates the work of the scroll 10, by providing:
- in some conditions a higher energy to the turbine than the scroll 10 does, since the latter is regulated as a function of the EGR flow rate,
- in other conditions by providing less energy to the turbine 6 than the scroll 10 does, in order to avoid the supercharger to reach its runaway speed rate.

For example, in the condition wherein the turbine 6 is mechanically connected with the supercharger 2, the equivalent effusion section of the scroll 10 defines a minimum speed of rotation of the turbo-supercharger. When the speed of rotation of the supercharger exceeds a predetermined threshold, the scroll 11 is controlled so that it opens its vanes, or its wall, (widening its effusion section) compensating the increased energy transferred to the turbine by crossing the scroll 10.

On the contrary, when the turbine is connected to a generator, then the scroll can be regulated to provide the necessary energy for recharging the vehicle batteries. According to a further preferred alternative embodiment of the invention, a fine regulation valve 8 and/or a check valve 12 may be present on the EGR branch 54. Such valve 8, represented for the sake of completeness in the scheme of figure 1, may be optionally provided as an additional regulation element when the engine is used in a mission comprising frequent and rapid transient conditions.

In particular, the counterpressure may be so low that the fine regulation valve 8 and/or the check valve 12 may avoid that the fresh air bypasses the engine E and arrives directly at the exhaust by means of the EGR branch 54.

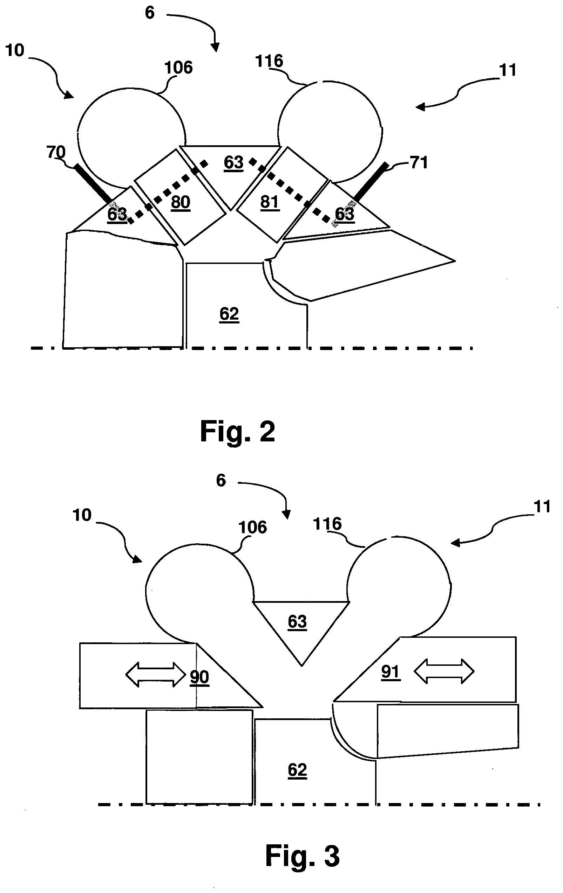

According to another aspect of the invention, preferred alternative embodiments of the twin-scroll turbine that are also object of the present invention are now described. With reference to figure 2, a twin-scroll turbine is shown, both scrolls being of the variable geometry type with swinging vanes.

In the figure, which shows a section according to the axis of the impeller 62, it is possible to observe the scrolls 106 and 116 with their respective swinging vanes 80 and 81 controlled by respective control elements 70 and 71. Such control elements are fully reciprocally independent.

The support rings 63 are suitable to define, together with the vanes themselves, to effusion directions that converge on the impeller.

The movement of the vanes with respect to a respective rotation axis, shown with a dashed line, determines intermediate positions between the full opening and the closing of the vanes. Wherein closing does not mean a full closing, but a smaller effusion section. Such technology is per se known in single-scroll turbines. In twin-scroll turbines it is known to use a single series of swinging vanes so that they intercept the flow leaving both scrolls. This, of course, does not allow to regulate the contribution of the scroll in a reciprocally independent way.

With reference to figure 3, a twin scroll turbine 6 according to the present invention is shown, implementing the so-called sliding sleeve technology on both the scrolls. In other words, each scroll has its own respective means for regulating the internal geometry. The ones being independent of the others. According to such solution, the effusion regulation is realized by means of the sliding elements according to the double head arrows, namely parallel to the impeller axis 62, to fully open or to annular inlet opening of the exhaust gas. Also in this case, the sliding elements can be individually controlled.

Also the so-called sliding sleeve technology is per se known in single-scroll turbines. The application of a single sliding sleeve intercepting simultaneously the flow of two scrolls is also known in the art, with the limits described above.

A method for controlling the turbine is now described. According to a first aspect, at low speed, namely at a speed lower than revolutions per minute at the maximum torque, both distributors of the two scrolls are closed to obtain the maximum progression of the turbo-supercharger 6,2.

Advantageously, such transient condition increases the counterpressure a lot, which facilitates the exhaust gas recirculation. It is exactly in the transient conditions that the emissions increase, thus such counterpressure facilitating the exhaust gas recirculation is particularly advantageous.

At a stationary speed of the turbo-supercharger , on the contrary, the EGR scroll is regulated as a function of the necessary EGR flow rate, while the other scroll 11 is regulated in a way complementary to the scroll 10 in order to provide to the turbine 6 the energy Ecomp necessary to the supercharger.

The method is described with reference to the functional block diagrams of figure 4, wherein each block is intended to correspond to the logic functions performed by the apparatus which realizes them:
- Step 30: calculation of an exhaust gas flow rate to be recirculated and of a boost pressure of the engine (E) ;
- step 31: regulation of the first scroll (10) to realize a counterpressure such that to ensure the recirculation of said exhaust gas flow rate given said boost pressure;
- step 32: calculation of an amount of energy provided by said first scroll (10) to the impeller of the turbine (6),
- step 33: calculation of a remaining amount of energy to be provided to said impeller, as a function of said boost pressure;
- step 34: regulation of the second scroll (11) in order to transfer said remaining amount to the impeller of the turbine (6).

When the quantity of EGR to be recirculated is negligible or equal to zero, the EGR scroll 10 can be regulated in order to be as open/closed as the second scroll 11. If a fine regulation valve 8 is present, such identical regulation can be ensured at any speed. On the contrary, if such fine regulation valve is not present, then the EGR scroll 10 can be regulated to be as open/closed as the second scroll 11 until the counterpressure is such as to induce the exhaust gas recirculation. Once such threshold has been exceeded, further closing regulation are up to the second scroll.

Advantageously, the fact that there is no pumping work when the exhaust gas recirculation is not necessary, according to the tests performed, allows to obtain an improvement of the engine overall performance of at least 3-5%, with an undoubted fuel saving.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. Exhaust gas recirculation system in a supercharged engine equipped with an ATS (after treatment system) device, the engine (E) comprising
- an intake manifold (4),
- exhaust manifolds (5, 5'), at least one (5) of said exhaust manifolds being connected to the intake manifold (4) to recirculate an exhaust gas flow rate (EGR) according to predetermined operating conditions (rpm, T) of the engine (E),
- means for monitoring the efficiency of said ATS,
- processing means configured to control said exhaust gas recirculation as a function of said efficiency of said ATS **characterized in that** a recirculated exhaust gas flow rate is inversely proportional to the efficiency of said ATS.

2. System according to one of the previous claims, further comprising injection means, in the ATS, of an aqueous additive to reduce pollutant emissions, wherein said processing means are configured to regulate said recirculated gas flow rate, with the same efficiency of the ATS, also as a function of an advance value of the injection time of the fuel in the cylinders and/or as a function of a predetermined flow rate of aqueous additive.

3. System according to claim 2, wherein said regulation of said recirculated gas flow rate is directly proportional to said advance of the injection time and/or inversely proportional to said aqueous additive flow rate.

4. System according to one of the claims 2 or 3, further comprising
- detection means of a filling procedure of a fuel tank or of a tank of aqueous additive to reduce pollutant emissions and
- means for .acquiring a unit price value of said fuel and of said aqueous additive, and
wherein said regulation of said recirculated gas flow rate and of said aqueous additive flow rate is a function also of said unit price.

5. System according to claim 4, wherein said regulation is performed by continuously minimizing a cost function based on said unit prices.

6. System according to any one of the previous claims, further comprising a twin-scroll (10,11) turbine (6), wherein a first scroll (10) has a respective inlet connected with said first exhaust manifold (5) and a second scroll (11) has a respective inlet connected with said second exhaust manifold (5') and wherein the exhaust manifolds are separate from each other.

7. System according to claim 6, wherein said first scroll (10) and said second scroll (11) have respective effusion static sections that are equal to each other and that can be regulated independently of one another.

8. System according to one of the claims 6 or 7, wherein said scrolls are constructively identical to each other.

9. System according to one of the previous claims, further comprising means for controlling the geometry of the scrolls (10, 11) configured to
- regulate (i) the first scroll (10) as a function of a mass of exhaust gas to be recirculated (EGR),
- regulate (ii) the second scroll (11) as a function of the overall energy (Ecomp) to be provided to the turbine (6).

10. System according to claim 9, wherein said regulation is realized in stationary conditions of a turbo-supercharger assembly (6,2) comprising said turbine (6) and a supercharger (2) for supercharging the engine (E) driven by the turbine (2).

11. System according to one of the previous claims 8 or 9, wherein said regulations (i, ii) are realized in order to avoid the turbo-supercharger (6, 2) or the turbo-generator to reach a runaway speed rate.

12. System according to claim 9, wherein the turbine drives an electric generator and said overall energy is a function of an energy to be transferred to the electric generator.

13. System according to one of the previous claims, wherein said connection between said first exhaust manifold (5) and said intake manifold (4) comprises:
- a fine regulation valve of the EGR (8) and/or
- a check valve (12) and/or
- an EGR cooler (9).

14. Exhaust gas recirculation method in an engine (E) supercharged by an turbine-supercharger assembly (6,2) and equipped with ATS and of means for monitoring the efficiency of the ATS, the method comprising a step of monitoring the efficiency of the ATS and a step of continuously controlling said exhaust gas recirculation as a function of said ATS efficiency.

15. Method according to claim 14, wherein a recirculated gas flow rate is inversely proportional to the efficiency of said ATS.

16. Method according to one of the previous claims 14 or 15, wherein the engine comprises injection means, in the ATS, of an aqueous additive to reduce the pollutant emissions, the method comprising a step of regulating said recirculated gas flow rate, the efficiency of the ATS being the same, also as a function of an advance value of the injection time of the fuel in the cylinders and/or as a function of a predetermined flow rate of aqueous additive.

17. Method according to claim 16, wherein said regulation of said recirculated gas flow rate is directly proportional to said advance of the injection time and/or inversely proportional to said aqueous additive flow rate.

18. Method according to one of the claims 16 or 17, further comprising the following steps:
- detection of a filling procedure of a fuel tank or of a tank of aqueous additive to reduce pollutant emissions and
- acquisition of a unit price value of said fuel and of said aqueous additive, and
wherein said regulation of said recirculated gas flow rate and of said aqueous additive flow rate is a function also of said unit price.

19. Method according to one of the previous claims from 14 to 18, further comprising the step of arranging a twin-scroll (10, 11) turbine (6) so that both scrolls (10, 11) have a variable geometry, one scroll (10) having means for regulating the geometry that are independent of the means for regulating the geometry of the other scroll (11).

20. Method according to claim 19, comprising the step of dimensioning a corresponding effusion static section of the first scroll (10), cooperating in the exhaust gas recirculation, as if the engine (E) was not provided with EGR.

21. Method according to claims 19 or 20 comprising the step of dimensioning effusion static sections of the scrolls (10, 11) in a way equal to each other.

22. Computer program comprising program code means which performs all the steps of the claims from 15 to 19, when such program is run on a computer.

23. Computer-readable means comprising a recorded program, said computer-readable means comprising program code means which performs all the steps according to the one of the claims from 15 to 19, when said program is run on a computer.

24. Ground vehicle comprising a supercharged internal combustion engine equipped with ATS and **characterized in that** it comprises an exhaust gas recirculation system according to one of the claims from 1 to 14.

## Patentansprüche

1. Abgasrückführungsanlage in einem aufgeladenen Motor, der mit einer ATS- (after treatment system - Nachbehandlungsanlagen-) Vorrichtung ausgestattet ist, wobei der Motor (E) Folgendes umfasst:
- einen Ansaugkrümmer (4),
- Abgaskrümmer (5, 5'), wobei wenigstens einer (5) der Abgaskrümmer mit dem Ansaugkrümmer (4) verbunden ist, um eine Abgasdurchflussmenge (AGR) entsprechend vorbestimmten Betriebsbedingungen (U/min, T) des Motors (E) zurückzuführen,
- Mittel zum Überwachen der Wirksamkeit der ATS,
- Verarbeitungsmittel, die dafür konfiguriert sind, die Abgasrückführung in Abhängigkeit von der Wirksamkeit der ATS zu steuern, **dadurch gekennzeichnet, dass** eine Durchflussmenge des zurückgeführten Abgases umgekehrt proportional zu der Wirksamkeit der ATS ist.

2. Anlage nach einem der vorhergehenden Ansprüche, die ferner, in der ATS, Einspritzmittel eines wässrigen Zuschlagstoffs zum Verringern von Schadstoffemissionen umfasst, wobei die Verarbeitungsmittel dafür konfiguriert sind, die Durchflussmenge des zurückgeführten Abgases, bei der gleichen Wirksamkeit der ATS, ebenfalls in Abhängigkeit von dem Einspritzzeitpunkt des Kraftstoffs in den Zylindern und/oder in Abhängigkeit von einer vorbestimmten Durchflussmenge an wässrigem Zuschlagstoff zu regulieren.

3. Anlage nach Anspruch 2, wobei die Regulierung der Durchflussmenge des zurückgeführten Abgases direkt proportional zu dem Vorverlegen des Einspritzzeitpunkts und/oder umgekehrt proportional zu der Durchflussmenge des wässrigen Zuschlagstoffs ist.

4. Anlage nach Anspruch 2 oder 3, die ferner Folgendes umfasst:
- Erkennungsmittel für einen Füllungsvorgang eines Kraftstofftanks oder eines Tanks für wässrigen Zuschlagstoff zum Verringern von Schadstoffemissionen,
- Mittel zum Erfassen eines Preiswertes pro Einheit des Kraftstoffs und des wässrigen Zuschlagstoffs und
wobei die Regulierung der Durchflussmenge des zurückgeführten Abgases und der Durchflussmenge des wässrigen Zuschlagstoffs ebenfalls von dem Preis pro Einheit abhängig ist.

5. Anlage nach Anspruch 4, wobei die Regulierung durch das kontinuierliche Minimieren einer Kostenfunktion auf der Grundlage der Preise pro Einheit durchgeführt wird.

6. Anlage nach einem der vorhergehenden Ansprüche, die ferner eine Doppelschnecken- (10, 11) Turbine (6) umfasst, wobei eine erste Schnecke (10) einen jeweiligen Einlass hat, der mit dem ersten Abgaskrümmer (5) verbunden ist, und eine zweite Schnecke (11) einen jeweiligen Einlass hat, der mit dem zweiten Abgaskrümmer (5') verbunden ist, und wobei die Abgaskrümmer voneinander getrennt sind.

7. Anlage nach Anspruch 6, wobei die erste Schnecke (10) und die zweite Schnecke (11) jeweilige effusionsstatische Sektionen haben, die einander gleich sind und die unabhängig voneinander reguliert werden können.

8. Anlage nach einem der Ansprüche 6 oder 7, wobei die Schnecken einander konstruktiv gleich sind.

9. Anlage nach einem der vorhergehenden Ansprüche, die ferner Mittel zum Steuern der Geometrie der Schnecken (10, 11) umfasst, die für Folgendes konfiguriert sind:
- die erste Schnecke (10) in Abhängigkeit von einer Masse an zurückzuführendem Abgas (AGR) zu regulieren (i),
- die zweite Schnecke (11) in Abhängigkeit von der Gesamtenergie (Ecomp), die der Turbine (6) zugeführt werden soll, zu regulieren (ii).

10. Anlage nach Anspruch 9, wobei die Regulierung unter stationären Bedingungen einer Turbolader-Baugruppe (6, 2) durchgeführt wird, welche die Turbine (6) und einen Lader (2), der durch die Turbine (6) angetrieben wird, zum Aufladen des Motors (E) umfasst.

11. Anlage nach einem der vorhergehenden Ansprüche 8 oder 9, wobei die Regulierungen (i, ii) durchgeführt werden, um zu vermeiden, dass der Turbolader (6, 2) oder der Turbogenerator eine Durchgangsdrehzahlrate erreicht.

12. Anlage nach Anspruch 9, wobei die Turbine einen elektrischen Generator antreibt und die Gesamtenergie von einer Energie abhängt, die zu dem elektrischen Generator übertragen werden soll.

13. Anlage nach einem der vorhergehenden Ansprüche, wobei die Verbindung zwischen dem ersten Abgaskrümmer (5) und dem Ansaugkrümmer (4) Folgendes umfasst:
- ein Feinregelventil der AGR (8) und/oder
- ein Rückschlagventil (12) und/oder
- einen AGR-Kühler (9).

14. Abgasrückführungsverfahren in einem Motor (E), der durch eine Turbine-Lader-Baugruppe (6, 2) aufgeladen wird und mit ATS und Mitteln zum Überwachen der Wirksamkeit der ATS ausgestattet ist, wobei das Verfahren einen Schritt des Überwachens der Wirksamkeit der ATS und einen Schritt des kontinuierlichen Steuerns der Abgasrückführung in Abhängigkeit von der ATS-Wirksamkeit umfasst.

15. Verfahren nach Anspruch 14, wobei eine Durchflussmenge des zurückgeführten Abgases umgekehrt proportional zu der Wirksamkeit der ATS ist.

16. Verfahren nach einem der vorhergehenden Ansprüche 14 oder 15, wobei der Motor, in der ATS, Einspritzmittel eines wässrigen Zuschlagstoffs zum Verringern von Schadstoffemissionen umfasst, wobei das Verfahren einen Schritt des Regulierens der Durchflussmenge des zurückgeführten Abgases, wobei die Wirksamkeit der ATS die gleiche ist, ebenfalls in Abhängigkeit von einem Vorverlegungswert des Einspritzzeitpunktes des Kraftstoffs in den Zylindern und/oder in Abhängigkeit von einer vorbestimmten Durchflussmenge an wässrigem Zuschlagstoff umfasst.

17. Verfahren nach Anspruch 16, wobei die Regulierung der Durchflussmenge des zurückgeführten Abgases direkt proportional zu dem Vorverlegen des Einspritzzeitpunkts und/oder umgekehrt proportional zu der Durchflussmenge des wässrigen Zuschlagstoffs ist.

18. Verfahren nach einem der Ansprüche 16 oder 17, das ferner die folgenden Schritte umfasst:
- das Erkennen eines Füllungsvorgangs eines Kraftstofftanks oder eines Tanks für wässrigen Zuschlagstoff zum Verringern von Schadstoffemissionen,
- das Erfassen eines Preiswertes pro Einheit des Kraftstoffs und des wässrigen Zuschlagstoffs und
wobei die Regulierung der Durchflussmenge des zurückgeführten Abgases und der Durchflussmenge des wässrigen Zuschlagstoffs ebenfalls von dem Preis pro Einheit abhängig ist.

19. Verfahren nach einem der Ansprüche 14 bis 18, das ferner den Schritt des Anordnens einer Doppelschnecken- (10, 11) Turbine (6) so, dass beide Schnecken (10, 11) eine veränderliche Geometrie haben, umfasst, wobei die eine Schnecke (10) Mittel zum Regulieren der Geometrie hat, die unabhängig von den Mitteln zum Regulieren der Geometrie der anderen Schnecke (11) sind.

20. Verfahren nach Anspruch 19, das den Schritt des Bemessens einer entsprechenden effusionsstatischen Sektion der ersten Schnecke (10), die in der Abgasrückführung mitwirkt, als ob der Motor (E) nicht mit AGR versehen wäre, umfasst.

21. Verfahren nach Anspruch 19 oder 20, das den Schritt des Bemessens von effusionsstatischen Sektionen der Schnecken (10, 11) auf eine Weise, die einander gleicht, umfasst.

22. Rechnerprogramm, das Programmcodemittel umfasst, die alle Schritte der Ansprüche 15 bis 19 ausführen, wenn ein solches Programm auf einem Rechner laufen gelassen wird.

23. Rechnerlesbare Mittel, die ein aufgezeichnetes Programm umfassen, wobei die rechnerlesbaren Mittel Programmcodemittel umfassen, die alle Schritte der Ansprüche 15 bis 19 ausführen, wenn das Programm auf einem Rechner laufen gelassen wird.

24. Bodenfahrzeug, das eine aufgeladene Verbrennungskraftmaschine, die mit ATS ausgestattet ist, umfasst und **dadurch gekennzeichnet ist, dass** es eine Abgasrückführungsanlage nach einem der Ansprüche 1 bis 14 umfasst.

## Revendications

1. Système de recirculation des gaz d'échappement dans un moteur suralimenté avec un dispositif ATS (système de post-traitement), le moteur (E) comprenant :
un collecteur d'admission (4),
des collecteurs d'échappement (5, 5'), au moins l'un (5) desdits collecteurs d'échappement étant raccordé au collecteur d'admission (4) pour faire recirculer un débit de gaz d'échappement (EGR) selon des conditions de fonctionnement prédéterminées (nombre de tours par minute, T) du moteur (E),
des moyens pour surveiller l'efficacité du ATS,
des moyens de traitement configurés pour contrôler ladite recirculation des gaz d'échappement en fonction de ladite efficacité dudit ATS, **caractérisé en ce qu'**un débit de gaz d'échappement recirculé est inversement proportionnel à l'efficacité dudit ATS.

2. Système selon l'une des revendications précédentes, comprenant en outre des moyens d'injection, dans le dispositif ATS, d'un additif aqueux afin de réduire les émissions de polluant, dans lequel lesdits moyens de traitement sont configurés pour réguler ledit débit de gaz recirculé, avec la même efficacité du dispositif ATS, également en fonction d'une valeur d'avance du temps d'injection du carburant dans les cylindres et/ou en fonction d'un débit prédéterminé d'additif aqueux.

3. Système selon la revendication 2, dans lequel ladite régulation dudit débit de gaz recirculé est directement proportionnelle à ladite avance du temps d'injection et/ou inversement proportionnelle audit débit d'additif aqueux.

4. Système selon l'une des revendications 2 ou 3, comprenant en outre :
des moyens de détection d'une procédure de remplissage d'un réservoir de carburant ou d'un réservoir d'additif aqueux pour réduire les émissions de polluant, et
des moyens pour acquérir une valeur de prix unitaire dudit carburant et dudit additif aqueux, et
dans lequel ladite régulation dudit débit de gaz recirculé et dudit débit d'additif aqueux dépend également dudit prix unitaire.

5. Système selon la revendication 4, dans lequel ladite régulation est réalisée en minimisant de manière continue une fonction de coût basée sur lesdits prix unitaires.

6. Système selon l'une quelconque des revendications précédentes, comprenant en outre une turbine (6) à double volute (10, 11), dans lequel une première volute (10) a une entrée respective raccordée avec ledit premier collecteur d'échappement (5) et une seconde volute (11) a une entrée respective raccordée avec ledit second collecteur d'échappement (5') et dans lequel les collecteurs d'échappement sont séparés l'un de l'autre.

7. Système selon la revendication 6, dans lequel ladite première volute (10) et ladite seconde volute (11) ont des sections statiques d'effusion respectives qui sont égales entre elles et qui peuvent être régulées indépendamment les unes des autres.

8. Système selon l'une des revendications 6 ou 7, dans lequel lesdites volutes sont identiques entre elles, du point de vue de la construction.

9. Système selon l'une des revendications précédentes, comprenant en outre des moyens pour contrôler la géométrie des volutes (10, 11) configurées pour :
réguler (i) la première volute (10) en fonction d'une masse de gaz d'échappement à recirculer (EGR),
réguler (ii) la seconde volute (11) en fonction de l'énergie globale (Ecomp) à fournir à la turbine (6).

10. Système selon la revendication 9, dans lequel ladite régulation est réalisée en conditions stationnaires d'un ensemble de turbocompresseur (6, 2) comprenant ladite turbine (6) et un compresseur (2) pour suralimenter le moteur (E) entraîné par la turbine (2).

11. Système selon l'une des revendications 8 ou 9, dans lequel lesdites régulations (i, ii) sont réalisées afin d'éviter que le turbocompresseur (6, 2) ou le turbogénérateur n'atteigne une vitesse de dérive.

12. Système selon la revendication 9, dans lequel la turbine entraîne un générateur électrique et ladite énergie globale dépend d'une énergie à transférer au générateur électrique.

13. Système selon l'une des revendications précédentes, dans lequel ledit raccordement entre ledit premier collecteur d'échappement (5) et ledit collecteur d'admission (4) comprend :
une valve de réglage fin du EGR (8), et/ou
une valve de non-retour (12), et/ou
un refroidisseur de EGR (9).

14. Procédé de recirculation des gaz d'échappement dans un moteur (E) suralimenté par un ensemble turbine - compresseur (6, 2) et équipé avec un ATS et de moyens pour surveiller l'efficacité du ATS, le procédé comprenant une étape pour surveiller l'efficacité du ATS et une étape pour contrôler, de manière continue, ladite recirculation des gaz d'échappement en fonction de ladite efficacité du ATS.

15. Procédé selon la revendication 14, dans lequel un débit de gaz recirculé est inversement proportionnel à l'efficacité dudit ATS.

16. Procédé selon l'une des revendications 14 ou 15, dans lequel le moteur comprend des moyens d'injection, dans le ATS, d'un additif aqueux pour réduire les émissions de polluant, le procédé comprenant une étape pour réguler ledit débit de gaz recirculé, l'efficacité du ATS étant la même, également en fonction d'une valeur d'avance du temps d'injection du carburant dans les cylindres et/ou en fonction d'un débit prédéterminé d'additif aqueux.

17. Procédé selon la revendication 16, dans lequel ladite régulation dudit débit de gaz recirculé est directement proportionnelle à ladite avance du temps d'injection et/ou inversement proportionnelle audit débit d'additif aqueux.

18. Procédé selon l'une des revendications 16 ou 17, comprenant en outre les étapes suivantes :
détecter une procédure de remplissage d'un réservoir de carburant ou d'un réservoir d'additif aqueux pour réduire les émissions de polluant, et
acquérir une valeur de prix unitaire dudit carburant et dudit additif aqueux, et
dans lequel ladite régulation dudit débit de gaz recirculé et dudit débit d'additif aqueux dépend également dudit prix unitaire.

19. Procédé selon l'une des revendications 14 à 18, comprenant en outre l'étape d'agencement d'une turbine (6) à double volute (10, 11), de sorte que les deux volutes (10, 11) ont une géométrie variable, une volute (10) ayant des moyens pour réguler la géométrie qui sont indépendants des moyens pour réguler la géométrie de l'autre volute (11).

20. Procédé selon la revendication 19, comprenant l'étape pour dimensionner une section statique d'effusion correspondante de la première volute (10) coopérant dans la recirculation des gaz d'échappement, comme si le moteur (E) n'était pas doté du EGR.

21. Procédé selon les revendications 19 ou 20, comprenant l'étape pour dimensionner des sections statiques d'effusion des volutes (10, 11) d'une manière identique l'une par rapport à l'autre.

22. Programme informatique comprenant des moyens de code de programme qui réalise toutes les étapes des revendications 15 à 19, lorsqu'un tel programme fonctionne sur un ordinateur.

23. Moyens lisibles par ordinateur comprenant un programme enregistré, lesdits moyens lisibles par ordinateur comprenant des moyens de code de programme qui réalisent toutes les étapes selon l'une des revendications 15 à 19, lorsque ledit programme fonctionne sur un ordinateur.

24. Véhicule terrestre comprenant un moteur à combustion interne suralimenté équipé avec un ATS et **caractérisé en ce qu'**il comprend un système de recirculation des gaz d'échappement selon l'une des revendications 1 à 14.
